Europäisches Patentamt

(19) European Patent Office

Office européen des brevets

(11) EP 0 933 720 A2

(12) **EUROPEAN PATENT APPLICATION**

(43) Date of publication:
04.08.1999 Bulletin 1999/31

(51) Int. Cl.⁶: $G06K\ 11/08$, $G06F\ 3/00$

(21) Application number: 98124052.6

(22) Date of filing: 17.12.1998

(84) Designated Contracting States:
AT BE CH CY DE DK ES FI FR GB GR IE IT LI LU MC NL PT SE
Designated Extension States:
AL LT LV MK RO SI

(30) Priority: 29.01.1998 JP 1649198
02.04.1998 JP 8988098

(71) Applicant: Shimadzu Corporation
Kyoto-shi, Kyoto 604-8511 (JP)

(72) Inventors:
• Kondo, Yasushi
c/o Shimadzu Corporation
Kyoto 604-8511 (JP)
• Fukuhara, Nobuyoshi
Niigata-ken 949-3100 (JP)
• Nakajima, Takashihi
Niigata-ken 943-0810 (JP)
• Soya, Hideki
c/o Shimadzu Corporation
Kyoto 604-8511 (JP)
• Yoshida, Yoshikazu
c/o Shimadzu Corporation
Kyoto 604-8511 (JP)
• Fukai, Katsuaki
c/o Shimadzu Corporation
Kyoto 604-8511 (JP)
• Takahashi, Hiroshi
c/o Shimadzu Corporation
Kyoto 604-8511 (JP)

(74) Representative:
Kilian, Helmut, Dr.
Wilhelms, Kilian & Partner
Patentanwälte
Eduard-Schmid-Strasse 2
81541 München (DE)

(54) **Input apparatus for the physically handicapped**

(57) An input apparatus for the physically handicapped for detecting a position of a user's line of sight, and executing an input operation according to an observed point. The apparatus includes a head mount display for displaying at least an input instructing image in response to a command from a computer, a line of sight detecting image pickup optical system mounted in the head mount display, a line of sight detecting device for detecting the position of the line of sight of the user wearing the head concerned mount display, an input enter device for detecting a predetermined motion of the user and outputting an enter signal, and a computing device operable, based on a result of detection by the line of sight detecting device, for computing a point on the input instructing image observed by the user wearing the head mount display, and executing the input operation, by regarding the point observed as an input position, upon receipt of the enter signal from the input enter device.

Fig.1

## Description

BACKGROUND OF THE INVENTION

(1) Field of the Invention

This invention relates to an input apparatus suited for use in communicating with others through computers by seriously handicapped people such as those suffering from ALS (amyotrophic lateral sclerosis) or other intractable diseases and having difficulties in communicating due to acroparalysis. The invention relates also to an input apparatus for the physically handicapped, which detects looking directions by acquiring eyeball images by means of an image pickup optical system, and controls a pointing device such as a mouse cursor based on detected information.

(2) Description of the Related Art

In recent years, personal computers have been used increasingly as a communication aiding device for the physically handicapped. Such communication using the personal computer, naturally, requires some form of input device, typically a keyboard. A limbs paralysis person suffering from a high-ranking cervical spine injury or cerebral infantila palsy has difficulty in operating a keyboard with the upper limbs. Such a person has to use a mouth stick or a special keyboard. A more seriously handicapped person would need a memory-resident special driver program based on a scanning method, encoding method or the like. In a method having been put to practical use for such handicapped people, characters (sentences) are expressed by using a virtual keyboard and switches for detecting even slight body motions. However, this method has poor input efficiency (number of characters inputted per unit time).

Generally, a physically handicapped person can input character information in one of three modes, i.e. a direct selection mode, a scan selection mode and an encoding mode.

In the direct selection mode, an operator selects one character directly from among a group of input characters. The keyboard is a typical input apparatus therefor.

In the scan selection mode, characters in a group of input characters are successively and automatically selected in a predetermined order, and a desired character is inputted by operating an enter switch when this character is selected. Since the characters are scanned in succession, it is time-consuming to input characters placed toward the end in the order of scanning. Thus, average input speed is slow.

In the encoding mode, characters are selected by generating, through switch operation, codes allocated to the respective characters. This mode stands intermediate between the direct selection mode and scan selection mode.

The above three modes have both advantages and disadvantages. The direct selection mode has the highest input efficiency, and there are demands for development of input apparatus for the direct selection mode suited to the physically handicapped.

Input apparatus using a light pen, ultrasonic wave, CCD camera or laser pointer have been developed heretofore as input apparatus for the direct selection mode for allowing the physically handicapped, who can use part of the body, to input characters only by moving the head.

However, the above input apparatus are difficult to use for the seriously handicapped who have difficulty in moving the head at will. An apparatus for detecting a line of sight has recently been proposed for such seriously handicapped people.

The conventional input apparatus using detection of a line of sight detects a line of sight by emitting low-level infrared light toward the eyeballs and acquiring eyeball images with an infrared camera disposed directly under the center of a CRT display or the like. Input characters are determined from results of the detection.

According to the conventional input apparatus using detection of a line of sight noted above, the user's angle of view is small since there is at least a certain distance between the user and the display. Consequently, the line of sight is movable only within a small range, which lowers precision in detecting the line of sight, hence a low degree of precision in determining input. This conventional apparatus requires detection of a neck movement, which requires detection of three-dimensional positions and image recognition. Thus, the apparatus has a disadvantage of being relatively large and complicated.

Furthermore, this type of input apparatus is often used by a seriously handicapped, bedridden person. Difficulties are encountered in arranging the display and infrared camera, and a heavy burden is imposed on the handicapped person.

Typical methods of analyzing eyeball images acquired with the above conventional input apparatus using detection of a line of sight include a cornea reflex method, a sclera reflex method and a pupil detection method.

The cornea reflex method utilizes movement, caused by rolling of the eyeballs, of virtual images formed by light reflected from corneal surfaces, and measures eyeball movements based on a relationship between cornea reflection images and the positions of pupil centers. The sclera reflex method measures eyeball movements by emitting light to the boundary between the pupil and the white of the eye and observing variations in the intensity of light reflected therefrom. The pupil detection method simply measures eyeball movements from the center of the pupil.

In each of the analyzing methods, where the object watched by the user is a personal computer, for example, an index is shown in a known position on the display (CRT or LCD) beforehand, and positions of the pupil centers on eyeball images are detected when the user looks at the index. A correlation is determined beforehand between an actual position of a line of sight and positions of the pupil centers on eyeball images acquired. The position of the line of sight is detected by using a correlation coefficient.

A pointing device, for example, may be controlled according to output of a result of detection of the line of sight position derived from the above analyzing methods. In this way, the personal computer may be operated based on the line of sight. Even a person suffering from acroparalysis and unable to operate a mouse or a keyboard at will may operate a personal computer freely only if that person can operate an enter switch.

When an able-bodied person uses a personal computer, he or she can discontinue operation at his or her free will. However, a disabled person operating a personal computer with the above input apparatus would not be able to discontinue operation at his or her will without help. Thus, an attendant is essential when an input operation is to be discontinued.

In the input apparatus of this type, the correlation between the positions of the pupil centers and the position of a line of sight deviates, due to a displacement of the body, for example, from what is measured first. Then, the correlation must be measured all over again. Even if an icon for remeasurement is provided on a display screen, for example, it is difficult to move the pointing device at will since the correlation has already deviated. It is difficult for a seriously handicapped person to carry out a remeasurement (calibration) without help.

## SUMMARY OF THE INVENTION

This invention has been made having regard to the state of the art noted above, and its object is to provide an input apparatus for the physically handicapped, which has a relatively simple construction, yet realizes a high degree of precision in determining input, and imposes a less burden on the physically handicapped than the conventional apparatus of this type.

Another object of this invention is to provide an input apparatus for the physically handicapped, which enables even a seriously handicapped person, without help, to remeasure a correlation between positions of the pupil centers and a position of a line of sight and to operate equipment for discontinuing input to a personal computer.

The above objects are fulfilled, according to this invention, by an input apparatus for the physically handicapped for detecting a position of a user's line of sight, and executing an input operation according to an observed point, the apparatus comprising a head mount display for displaying at least an input instructing image in response to a command from a computer, a line of sight detecting image pickup optical system mounted in the head mount display, a line of sight detecting device for detecting the position of the line of sight of the user wearing the head concerned mount display, an input enter device for detecting a predetermined motion of the user and outputting an enter signal, and a computing device operable, based on a result of detection by the line of sight detecting device, for computing a point on the input instructing image observed by the user wearing the head mount display, and executing the input operation, by regarding the point observed as an input position, upon receipt of the enter signal from the input enter device.

According to this invention, an input instructing image such as of a keyboard, icons and the like is displayed on the head mount display, thereby enlarging an amount of movement of the user's line of sight when an observed point moves on the image. This improves the line of sight detecting precision, and hence input instructing precision. At the same time, the line of sight is detected by using the line of sight detecting image pickup optical system mounted in the head mount display. This feature eliminates the necessity to detect movement of the neck, thereby simplifying the apparatus. There is no need to take an arrangement of the display and the line of sight detecting image pickup optical system into consideration. A physically handicapped, bedridden person will be relieved of the burden of having to turn toward these components.

That is, the image displayed on the head mount display is very close to the user's eyes, which provides a large angle of view for the entire image. Since a large amount of movement of the user's line of sight occurs when the observed point moves on the image, the line of sight detecting precision is improved drastically even with the image pickup optical system equivalent to a conventional optical system.

With a field of vision detected by using the line of sight detecting image pickup optical system mounted in the head mount display, a positional relationship between the image pickup optical system and the neck of the user wearing the head mount display is substantially invariable. Thus, there is no need for detecting neck movement, and the user is relieved from the burden of having to turn toward the display in time of making input.

According to this invention, as described above, an input instructing image is displayed on the head mount display, and the user's line of sight is detected by using the image pickup optical system mounted in the head mount display, to compute an observed point and determine an input instructing position. Thus, an input instructing point may be derived from a movement of the line of sight on the image providing a larger angle of view than an ordinary computer display such as a CRT display. The input instructing precision is improved drastically. There is little chance of input errors due to the apparatus. These features facilitate an input operation.

With use of the head mount display, even a bedridden person having difficulty in looking at a display can operate the computer in a free and easy posture. This leads to a reduction of the burden.

Furthermore, with the user's line of sight detected by using the line of sight detecting image pickup optical system mounted in the head mount display, a positional relationship between the optical system and the neck of the user wearing the head mount display is substantially invariable. Thus, there is no need for detecting neck movement, and the apparatus is simplified.

In the apparatus according to this invention, it is preferred that the input enter device is operable to measure, by using the result of detection by the line of sight detecting device, a duration of observation by the user of a location in a fixed range, and to determine an input to be entered when the duration exceeds a predetermined period of time.

A duration of observation by the user of a location in a fixed range on the input instructing image is measured, to determine an input to be entered when the duration exceeds a predetermined period of time. Thus, the personal computer may be operated only by an input based on eye movement. A physically handicapped person is further relieved from the burden.

Preferably, the input enter device is operable to detect blinking of the user from eyeball image signals received from the line of sight detecting image pickup optical system, and to determine an input to be entered when the blinking continually occurs a plurality of times in a predetermined brief period of time.

A circuit device may be provided to detect the user's blinking from eyeball image signals received from the line of sight detecting image pickup optical system, and a software device may be employed to determine an input to be entered when the blinking continually occurs a plurality of times in a predetermined brief period of time. Then, the personal computer may be operated only by an input based on eye movement. A physically handicapped person is further relieved from the burden.

In another aspect of the invention, an input apparatus for the physically handicapped is provided for detecting a position of a user's line of sight, and operating a pointing device of equipment based on detected information, the apparatus comprising an image pickup optical system for detecting the user's line of sight, a line of sight detecting device for detecting the position of the user's line of sight by using the image pickup optical system, an eye open/close detecting device for detecting closing of the user's eyes based on a result of detection by the line of sight detecting device, and a control device for controlling the equipment by adding a result of detection by the eye open/close detecting device to control information.

Infrared light is emitted to the eyeballs, and the image pickup optical system is used to acquire eyeball images for detecting a line of sight position. In picking up such eyeball images, the pupils tend to absorb the infrared light while the other parts tend to reflect the infrared light. Thus, the signals received by the image pickup optical system are separable to pupil signal portions with low strength and the other signal portions with high strength. When the eyes are closed, the signal portions of low strength corresponding to the pupils diminish since the pupils are covered by the eyelids. It may therefore be determined from the signal portions of low strength that the eyes are closed.

Opening and closing of the eyes are determined based on detection results obtained from the eyeball image signals, The equipment may be controlled such that, when the eyes have been closed for at least a predetermined period of time T1, for example, a remeasurement is made of a correlation between the line of sight position and pupil center positions. When the eyes remain closed for at least a predetermined period of time T2 (T2>T1), the input of the eyeball image signals is discontinued.

The control of the equipment made by using the result of detection that the eyes are closed is not limited to a specific mode. Besides the above-noted equipment control for remeasurement of the correlation between the line of sight position and pupil center positions and termination of the eyeball image input, an input entering operation may be carried out when information on a display position of a pointing device is inputted, for example.

According to this invention, as described above, a device is provided to detect that the user has closed his or her eyes, and the equipment is controlled by adding results of detection to control information. Thus, a seriously handicapped person can operate the equipment for remeasuring the correlation between the line of sight position and pupil center positions and discontinuing input to a personal computer or the like without help of an attendant. The equipment may be used with increased facility.

BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.

Fig. 1 is a block diagram showing a construction in a first embodiment;

Figs. 2A and 2B are explanatory views showing a method of detecting and computing a line of sight executed by a line of sight detection circuit;

Fig. 3 is a block diagram showing a modification of the first embodiment;

Fig. 4 is a block diagram showing another modification of the first embodiment;

Fig. 5 is a block diagram showing a construction in a second embodiment; and

Fig. 6 is a flow chart showing an operation.

## DESCRIPTION OF THE PREFERRED EMBODIMENTS

Preferred embodiments of this invention will be described in detail hereinafter with reference to the drawings.

### First Embodiment

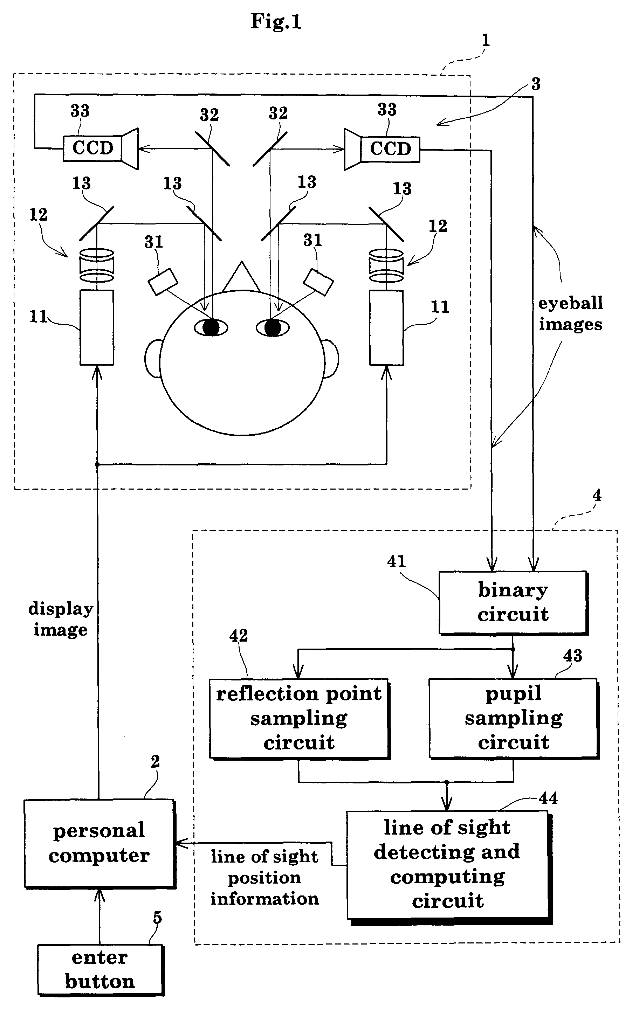

Fig. 1 is a block diagram showing a construction in this embodiment.

A head mount display 1 is a known device having LCDs (liquid crystal displays) 11, display optics 12 and half mirrors 13 for presenting the wearer with images, these components being provided in pairs for the right and left eyes. The LCDs 11 receive image signals from a personal computer 2 to show a display screen of personal computer 2 in enlargement in front of the wearer's eyes. The image of personal computer 2 serves as an input instructing image of a keyboard, icons and the like in time of making input.

The head mount display 1 further includes a line of sight detecting image pickup optical system 3 having infrared light sources 31, half mirrors 32 and CCD cameras 33. The CCD cameras 33 pick up images of the eyeballs watching the display screen on the head mount display 1.

The CCD cameras 33 of image pickup optical system 3 transmit eyeball image signals to a line of sight detection circuitry 4. The line of sight detection circuitry 4 includes a binary circuit 41, a reflection point sampling circuit 42, a pupil sampling circuit 43 and a line of sight detecting and computing circuit 44. The eyeball image signals from CCD cameras 33 are first taken into the binary circuit 41 where the signals are binary-coded by using a predetermined threshold. Subsequently, the reflection point sampling circuit 42 and pupil sampling circuit 43 sample positions of reflection images on the cornea of infrared light from the infrared light sources 31 and center positions in pupil images, respectively. The line of sight detecting and computing circuit 44 computes positions of lines of sight of the wearer.

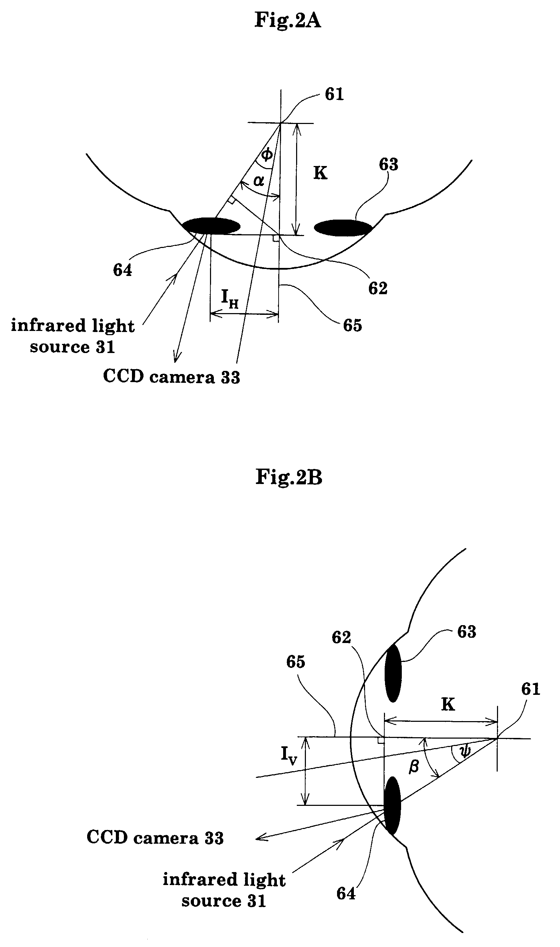

A method of computing positions of lines of sight will be described with reference to Figs. 2A and 2B. Figs. 2A and 2B are a schematic plan view and a schematic side view of an eyeball. In these figures, numeral 61 denotes the center of curvature of the cornea, numeral 62 denotes the position of the pupil center, numeral 63 denotes the iris, numeral 64 denotes a cornea reflection image, and numeral 65 denotes a line of sight.

CCD camera 33 forms with the infrared light source 31 an angle $\phi$ in the horizontal direction and an

angle $\psi$ in the vertical direction. When the line of sight 65 forms with the infrared light source 31 an angle $\alpha$ in the horizontal direction and an angle $\beta$ in the vertical direction, a horizontal distance $l_H$ between the position of the pupil center 62 and a center position in the cornea reflection image 64 is expressed by equation (1) below, and a vertical distance $l_V$ therebetween is expressed by equation (2):

$$l_H = K \cdot \tan \alpha \cdot \cos (\alpha - \phi) \qquad (1)$$

$$l_V = K \cdot \tan \beta \cdot \cos (\beta - \phi) \qquad (2)$$

In these equations, K is a distance from the center of curvature of the cornea 61 to the position of the pupil center 62 as shown in Figs. 2A and 2B. Equation (2) may be expressed by equation (3) below since $\psi$ = 0 when the optical axes of CCD camera 33 and infrared light source 31 extend in the same direction (Kazuyuki Ito and Yasuo Sudo: "On a Line of Sight Detecting Method Based on Tracking of Pupil Center Point and Cornea Reflection Point", National Physically Handicapped People's Rehabilitation Center Laboratory Bulletin No. 16, pp.89-94, 1995).

$$IV = K \cdot \sin \beta \qquad (3)$$

When $\alpha$ is small (0 to 30°), values of $l_H$ are linear. Thus, by defining as reference values a horizontal distance and a vertical distance between two characteristic points obtained when the user looks at a certain reference point, the point on the head mount display 1 observed by the user may be derived from the horizontal and vertical distances between the two characteristic points.

The line of sight detecting and computing circuit 44 computes the position of the user's line of sight by the above method and transmits this information to the personal computer 2. The personal computer 2 moves the cursor on the image of head mount display 1 based on this line of sight position information.

The personal computer 2 has an enter button 5 connected thereto. The enter button 5 is operable to transmit an input enter signal to the personal computer 2. The personal computer 2 takes in, as input information, a cursor position at a point of time when the input enter signal is supplied.

According to the above embodiment, a physically handicapped person wearing the head mount display 1 looks at a desired character, mark or the like on the input instructing image of a keyboard, icons and the like displayed thereon. Then, the handicapped person operates the enter button 5 to input that character or the like to the personal computer 2.

That is, as an able-bodied person operates a personal computer with a mouse, a physically handicapped person can easily operate the personal computer 2 by means of the head mount display 1 and enter button 5. The handicapped person can communicate with able-bodied and other people on a network through application software designed to run on the personal computer 2 for use by the physically handicapped.

The keyboard, icons and the like displayed on the head mount display 1 are operated by movement of the line of sight as above. By using an audio generating application, for example, a physically handicapped person may be able to communicate vocally with an able-bodied person.

Input may be made to the personal computer 2 only by looking at the input instructing image displayed on the head mount display 1 attached to the head, and operating the enter button 5. There is no need to turn toward a CRT or other type of display, which has been necessary with a conventional input apparatus of this type. Thus, no burden is imposed on the user. At the same time, since an instructing position is based on a line of sight detected when the user looks at the image on the head mount display 1 providing a large angle of view, a high degree of precision is achieved in determining inputs, and input errors are very unlikely to be made at the apparatus side.

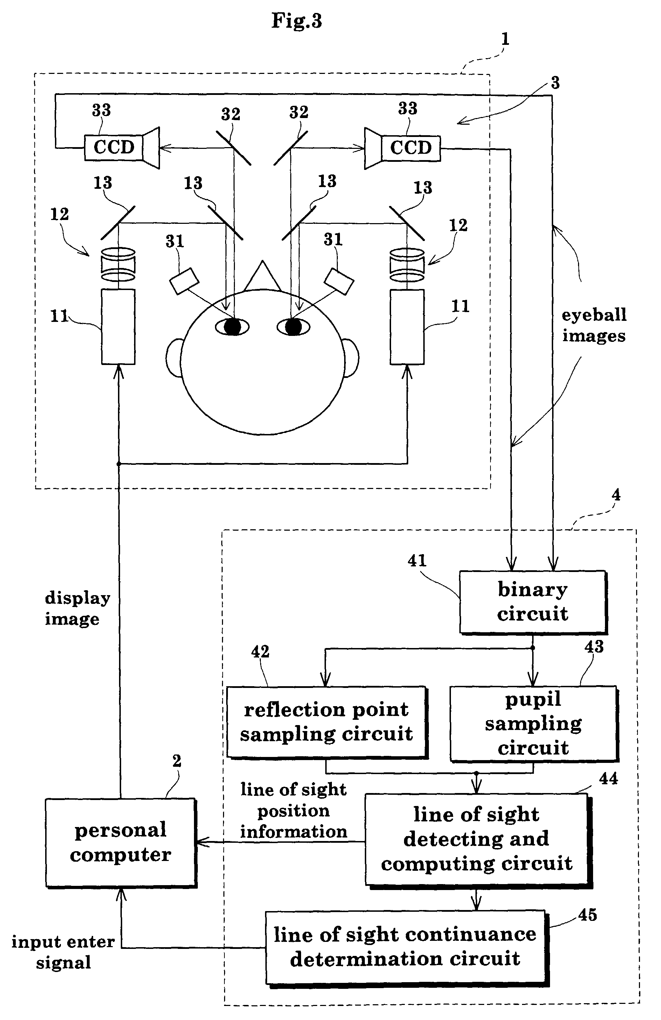

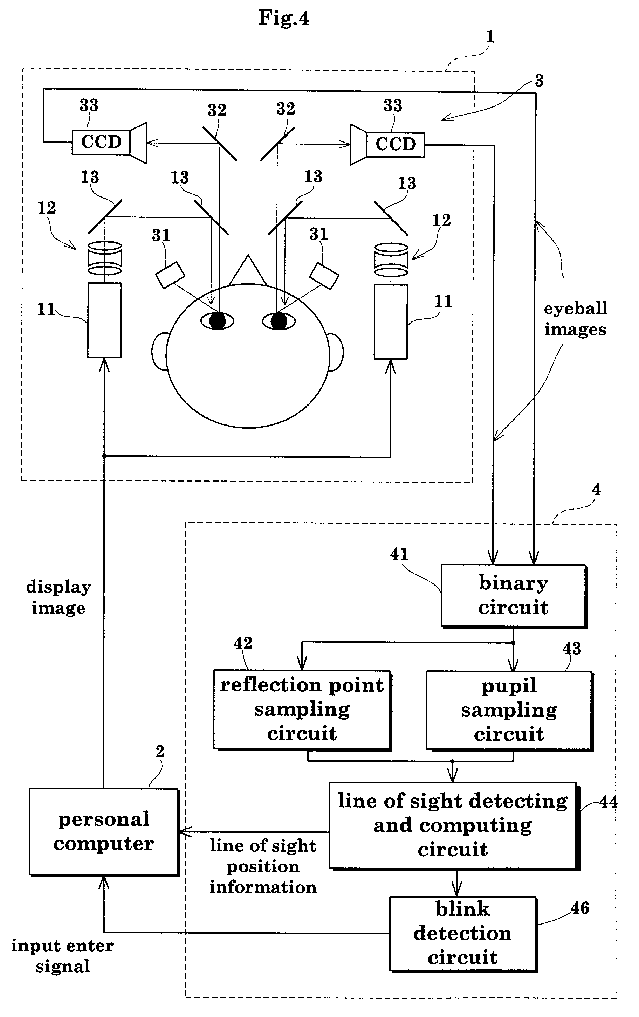

In the above embodiment, the enter button 5 is provided as a device for generating an input enter signal. This invention is not limited thereto. An input enter signal may be generated by software. Such examples are illustrated in Figs. 3 and 4.

Fig. 3 shows an example where an input enter signal is generated when the wearer looks at a location within a given range (e.g. the same character or the like) on the input instructing image. Here, the input apparatus has, in addition to the construction shown in Fig. 1, a line of sight continuance determination circuit 45 included in the line of sight detection circuitry 4.

The line of sight continuance determination circuit 45 computes an amount of movement of the line of sight per unit time based on the line of sight position information received from the line of sight detecting and computing circuit 44, determines that an input should be entered when the amount of movement does not exceed a predetermined value, and transmits an input enter signal to the personal computer 2. The personal computer 2 takes in, as input information, a cursor position at a point of time when the input enter signal is supplied from the line of sight continuance determination circuit 45.

Fig. 4 shows an example where an input enter signal is generated when the wearer blinks a plurality of times. Here, the input apparatus has, in addition to the construction shown in Fig. 1, a blink detection circuit 46 included in the line of sight detection circuitry 4.

The blink detection circuit 46 detects blinks from the eyeball image signals supplied by the CCD cameras 33, and generates an input enter signal. Specifically, this construction utilizes a phenomenon that, when the eyelids are closed, nothing appears in the binary images obtained from the eyeball image signals supplied by the CCD cameras 33. The blink detection circuit 46 detects the frequency of this no-input state, determines that an input should be entered when a plurality of (e.g. two) blinks occur continually within a very brief period of time, and transmits an input enter signal to the personal computer 2. The personal computer 2 takes in, as input information, a cursor position at a point of time when the input enter signal is supplied from the blink detection circuit 46.

Second Embodiment

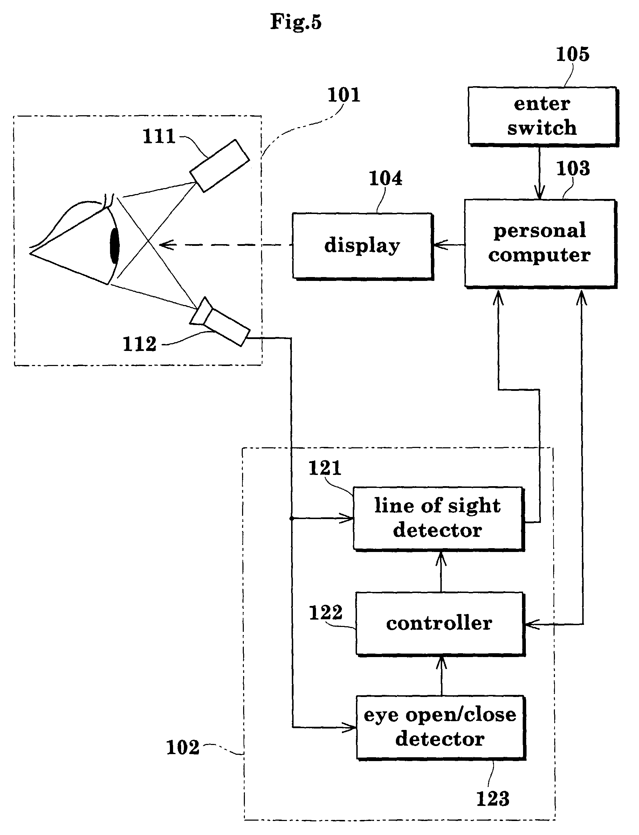

Fig. 5 is a block diagram showing a construction in this embodiment.

An image pickup optical system 101 includes infrared light sources 111 for emitting infrared light to the eyeballs, and CCD cameras 112 for picking up images of the eyeballs. Thus, the image pickup optical system 101 picks up the images of the eyeballs watching a screen on a display 104 such as an LCD.

The CCD cameras 112 of image pickup optical system 101 transmit eyeball image signals to a line of sight detection system 102. The line of sight detection system 102 includes a line of sight detector 121, a controller 122 and an eye open/close detector 123.

The line of sight detector 121 processes the eyeball image signals from CCD cameras 112 based the cornea reflex method, sclera reflex method or pupil detection method discussed in the Description of the Related Art hereof. Through this process, the line of sight detector 121 detects positions of the pupil centers in eyeball images when the user looks at an index appearing on the display 104, and determines a correlation between the pupil centers in the eyeball images and an actual position of a line of sight to detect the position of the line of sight. A personal computer 103 takes in, successively in predetermined sampling cycles, line of sight position information obtained by the line of sight detector 121.

The eye open/close detector 123 detects blinking of the eyes looking at the index on the display 104.

Specifically, when detecting a position of the line of sight by emitting infrared light to the eyeballs, the pupils tend to absorb the infrared light while the other parts tend to reflect the infrared light. Thus, the eyeball image signals from CCD cameras 112 of image pickup optical system 101 are separable to pupil signal portions with low strength and the other signal portions with high strength. When the eyes are closed, the signal portions of low strength corresponding to the pupils diminish since the pupils are covered by the eyelids. In using these phenomena, an appropriate threshold is set to the signal portions of low strength corresponding to the pupils of the eyeball image signals from CCD cameras 112. It is determined that the eyes are closed when the signal portions corresponding to the pupils fall below the threshold. Results of detection by the eye open/close detector 123 are transmitted to the controller 122.

Based on the detection results of eye open/close detector 123, the controller 122 carries out an operation, described hereinafter, for a calibration (remeasurement of the correlation between the line of sight position and pupil center positions) and for discontinuing a line of sight detection.

The personal computer 103 displays a pointing device on the screen of display 104, and moves the pointing device in accordance with the line of sight position information received from the line of sight detector 121 of line of sight detection system 102. Further, the personal computer 103 switches the display 104 to a calibration screen in response to a request signal from the controller 122 of line of sight detection system 102.

The personal computer 103 has an enter switch 105 connected thereto. The enter switch 105 is operable to transmit an input enter signal to the personal computer 103. The personal computer 103 takes in, as input information, a pointing device display position at a point of time when the input enter signal is supplied.

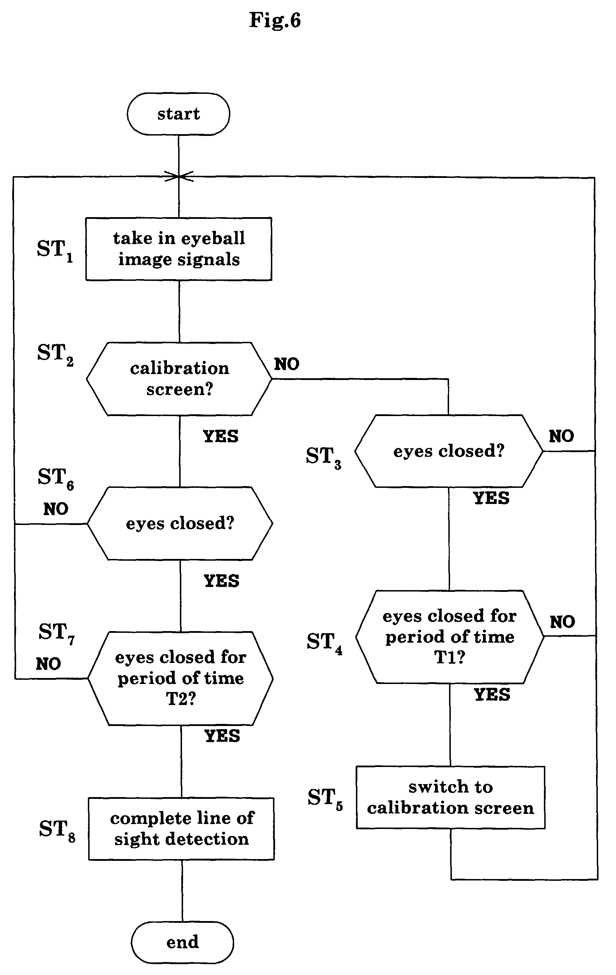

The functions of this embodiment will be described along with the operation of controller 122 of line of sight detection system 102. Fig. 6 is a flow chart showing details of the operation.

Upon start of the operation, the eyeball image signals are successively taken in from CCD cameras 112 of image pickup optical system 101 (step ST1).

Next, the controller 122 communicates with the personal computer 103 to determine whether the calibration screen is displayed on the display 104 (step ST2). When a pointing device operating screen is displayed instead of the calibration screen, the controller 122 checks, based on the results of detection by the eye open/close detector 123 of line of sight detection system 102, whether the user's eyes are closed (step ST3). When the eyes are not closed, the controller 122 continues to take in the eyeball image signals, and performs the line of sight detection and input controls.

When the display 104 shows the pointing device operating screen and the user's eyes are closed, the controller 122 determines whether the eyes have been closed for at least a predetermined period of time T1 (step ST4). When the eyes have been closed for at least the predetermined period of time T1, the controller 122 transmits a command signal to the personal computer 103 to switch the display 104 to the calibration screen (step ST5). At this point, the controller 122 continues to take in the eyeball image signals from CCD cameras 112.

Subsequently, the controller 122 checks again whether the user's eyes are closed (step ST6). When the eyes are not closed, the controller 122 continues to take in the eyeball image signals, and carries out a calibration. When the eyes are not closed after the calibration is completed, the controller 122 takes in the eyeball image signals, and performs the line of sight detection and input controls.

On the other hand, when the display 104 shows the calibration screen and the user's eyes are closed, the controller 122 determines whether the eyes have been closed for at least a predetermined period of time T2 (T2>T1) (step ST7). At a point of time the period of time T2 elapses with the eyes closed, the controller 122 stops taking in the eyeball image information and terminates the line of sight detection (step ST8).

According to this embodiment, when the correlation between the positions of the pupil centers and the position of a line of sight deviates, due to a displacement of the body, for example, from what is measured first, switching is made by closing the eyes for at least the period of time to the state for performing a remeasurement (calibration). Further, when the user desires to discontinue a line of sight input, he or she has only to close the eyes for at least the period of time T2. Thus, a handicapped person can perform a calibration and stop a line of sight input at his or her free will without help of an attendant.

In this embodiment, as in the first embodiment, a pointing device may be displayed on the head mount display, and the above image pickup optical system 101 may be provided for the head mount display to carry out a line of sight detection and input controls. With this construction, input may be made to the personal computer 103 only by looking at the pointing device displayed on the head mount display attached to the head, and operating the enter switch 105. There is no need to turn toward a CRT or other type of display, which has been necessary with a conventional input apparatus of this type. Thus, even a physically handicapped, bedridden person who has difficulty in watching a display may be able to operate a personal computer in a free and easy posture. This leads to an advantage of lightening the burden on the user.

In the above embodiment, the enter switch 105 is provided as a device for generating an input enter signal. Instead, an input enter signal may be generated by using results of detection by the eye open/close detector 123 of line of sight detection system 102. As in the first above embodiment, for example, whether the user has blinked is detected based on results of detection by the eye open/close detector 123, and an input may be entered when the user continually blinks twice within a predetermined period of time.

In this embodiment, the functions to perform a calibration and discontinue a line of sight input are performed by the line of sight detection system 102. This embodiment may be modified to have these functions carried out by the personal computer 103.

The present invention may be embodied in other specific forms without departing from the spirit or essential attributes thereof and, accordingly, reference should be made to the appended claims, rather than to the foregoing specification, as indicating the scope of the invention.

**Claims**

1. An input apparatus for the physically handicapped for detecting a position of a user's line of sight, and executing an input operation according to an observed point, said apparatus comprising:

   a head mount display for displaying at least an input instructing image in response to a command from a computer;
   a line of sight detecting image pickup optical system mounted in said head mount display;
   line of sight detecting means for detecting said position of the line of sight of the user wearing said head concerned mount display, by using said line of sight detecting image pickup optical system;
   input enter means for detecting a predetermined motion of the user and outputting an enter signal; and
   computing means operable, based on a result of detection by said line of sight detecting means, for computing a point on said input instructing image observed by the user wearing said head mount display, and executing said input operation, by regarding said point observed as an input position, upon receipt of said enter signal from said input enter means.

2. An apparatus as defined in claim 1, wherein said input enter means is operable to measure, by using said result of detection by said line of sight detecting means, a duration of observation by the user of a location in a fixed range, and to determine an input to be entered when said duration exceeds a predetermined period of time.

3. An apparatus as defined in claim 1, wherein said input enter means is operable to detect blinking of the user from eyeball image signals received from said line of sight detecting image pickup optical system, and to determine an input to be entered when said blinking continually occurs a plurality of times in a predetermined brief period of time.

4. An apparatus as defined in claim 1, wherein said line of sight detecting means includes a binary circuit for binary-coding, with reference to a predetermined threshold, eyeball image signals received from said line of sight detecting image pickup optical system, a reflection point sampling circuit for sampling positions of reflected images on the user's cornea based on signals from said binary circuit, and a pupil sampling circuit for sampling center positions in pupil images based on said signals from said binary circuit.

5. An apparatus as defined in claim 2, wherein said line of sight detecting means includes a binary circuit for binary-coding, with reference to a predetermined threshold, eyeball image signals received from said line of sight detecting image pickup optical system, a reflection point sampling circuit for sampling positions of reflected images on the user's cornea based on signals from said binary circuit, and a pupil sampling circuit for sampling center positions in pupil images based on said signals from said binary circuit.

6. An apparatus as defined in claim 3, wherein said line of sight detecting means includes a binary circuit for binary-coding, with reference to a predetermined threshold, eyeball image signals received from said line of sight detecting image pickup optical system, a reflection point sampling circuit for sampling positions of reflected images on the user's cornea based on signals from said binary circuit, and a pupil sampling circuit for sampling center positions in pupil images based on said signals from said binary circuit.

7. An input apparatus for the physically handicapped for detecting a position of a user's line of sight, and operating a pointing device of equipment based on detected information, said apparatus comprising:

   an image pickup optical system for detecting said user's line of sight;
   line of sight detecting means for detecting the position of the user's line of sight by using said image pickup optical system;
   eye open/close detecting means for detecting closing of the user's eyes based on a result of detection by said line of sight detecting means; and
   control means for controlling the equipment by adding a result of detection by said eye open/close detecting means to control information.

8. An apparatus as defined in claim 7, wherein said control means is operable, when said eye open/close detecting means detects the user's eyes being closed for at least a predetermined period of time T1, to control the equipment to remeasure a correlation between center positions of the user's pupils and an actual line of sight position.

9. An apparatus as defined in claim 7, wherein said control means is operable, when said eye open/close detecting means detects the user's eyes being closed for at least a predetermined period of time T2, to control the equipment to discontinue detection of the position of the user's line of sight.

10. An apparatus as defined in claim 7, wherein said image pickup optical system is mounted in a head mount display worn by the user.

## Fig.1

# Fig.2A

# Fig.2B

## Fig.3

## Fig.4

**Fig.5**

## Fig.6

```
                    start

ST₁         take in eyeball
            image signals

ST₂          calibration          NO
              screen?
                                         ST₃      eyes closed?       NO
                  YES

ST₆
NO            eyes closed?                              YES

                  YES

ST₇                                      ST₄    eyes closed for      NO
NO          eyes closed for                     period of time
            period of time                            T1?
                  T2?
                                                       YES

                  YES

            complete line of         ST₅         switch to
ST₈         sight detection                   calibration screen


                     end
```